# EUROPEAN PATENT SPECIFICATION

(11) **EP 2 392 551 B1**
(45) Date of publication and mention of the grant of the patent: **06.03.2013**
(21) Application number: 11006359.1
(22) Date of filing: 15.07.2008
(51) Int. Cl.: C03C 27/12, B32B 17/10

(54) **Use of a plastic film in a curved laminated glass**
Verwendung einer Kunststofffolie in einem Verbundglas
Utilisation d'un film plastique dans un verre stratifié

(30) Priority: 31.07.2007 JP 2007199378; 31.07.2007 JP 2007199379; 31.07.2007 JP 2007199380
(43) Date of publication of application: 07.12.2011
(62) Divisional of application: 08791153.3
(73) Proprietor: Central Glass Company, Limited, Yamaguchi 755-0001 (JP)
(72) Inventor: Takamatsu, Atsushi, Matsusaka-shi Mie 515-0001 (JP); Izutani, Kensuke, Matsusaka-shi Mie 515-0001 (JP); Miyazaki, Makoto, Tokyo 101-0054 (JP); Yonekura, Masaaki, Matsusaka-shi Mie 515-0001 (JP)
(74) Representative: Manitz, Finsterwald & Partner GbR

(56) References cited:
- EP-A1- 0 157 030
- US-A- 4 072 779
- US-A- 4 465 736
- US-A- 5 024 895
- US-A- 5 091 258
- US-A- 5 238 743

## Description

### TECHNICAL FIELD

The present invention relates to a laminated glass prepared by laminating a glass plate, an interlayer film, a transparent plastic film, an interlayer film, and a glass plate in this order.

### BACKGROUND OF THE INVENTION

There is known, as a laminated glass provided with a heat ray reflective function, one prepared by laminating two glass plates using two interlayer films having a plastic film, particularly a polyethylene terephthalate film, interposed therebetween.

In general, a laminated glass is subjected to a high-temperature, high-pressure treatment using an autoclave to achieve a thermal adhesion between the glass plates and the polyester film by interlayer films.

For example, Patent Publication 1 discloses a laminated glass prepared by a lamination by interposing between two glass plates a flexible laminate in which a heat ray reflective plastic film prepared by forming thin films on a polyester film is interposed between two interlayer films.

Furthermore, Patent Publication 2 discloses a laminate in which a near-infrared ray shielding film formed of many of plastic layers is interposed between two polyvinyl butyral sheets, and in which furthermore this is interposed between two glass plates. It is described that this near-infrared ray shielding film is 2% or less in both contraction percentages by a treatment at 150°C for 30 minutes in the film forming direction and in the transverse direction from the viewpoint of suppressing the occurrence of exfoliation and cracks between the glass and the film after sticking to glasses and that a contraction percentage difference by a treatment at 150°C for 30 minutes is 0.5% or less from the viewpoint of suppressing the occurrence of creases.

Furthermore, as one for preventing defects such as creases when a laminated glass is prepared by a lamination by interposing a polyethylene terephthalate film between two PVB films, it is described in Patent Publication 3 that, when a functional film having selective light transmission and conductivity is interposed between polyvinyl butyral films to prepare a laminated glass, a polyester terephthalate used for the functional film is made to have a heat elongation percentage of 0.1-1.0% in its one direction and a heat contraction percentage of 0.1-1.0% in a direction perpendicular thereto for preventing an external appearance defect such as creases.

It is described in Patent Publication 4 that, when a laminated glass is prepared by using a heat ray reflective film in which indium oxide and silver films have been formed on a plastic film, one having a thermal contraction percentage of 1-20% upon a heat process is used as the plastic film.

US 5,091,258 discloses a laminate comprising a transparent, thermoplastic substrate layer and at least one layer of plasticized polyvinyl butyral bonded on one side to a functional performance layer or the substrate layer.

US 5,238,743 relates to a thermoplastic sheet produced by a process comprising the steps of biaxially stretching a thermoplastic sheet at a temperature of 60°C higher than its glass transition temperature, heat-setting the sheet and subsequently stretching the sheet at a temperature below its glass transition temperature.

US 4,465,736 discloses a light transmitting or a electrically conductive film composed of a carrier film of transparent polymer film having a thickness of less than 125 µm and a thin selectively light transmitting or electrically conductive coating borne on at least one surface of the carrier film.
Patent Publication 1: Japanese Patent Application Publication 56-32352
Patent Publication 2: Japanese Patent Application Publication 2005-40868
Patent Publication 3: Japanese Patent Application Publication 60-225747
Patent Publication 4: Japanese Patent Application Publication 6-270318

### SUMMARY OF THE INVENTION

When a transparent plastic film is interposed between interlayer films, and this is inserted between two glass plates to prepare a laminated glass, there occurs a problem that creases are generated on the entire surface or a part of the plastic film inserted into the laminated glass to cause an external appearance defect.

Furthermore, in case that an infrared ray reflective film is formed on the transparent plastic film, there also occurs a problem that reflectance of the infrared ray reflective film lowers.

It is a task of the present invention to provide a laminated glass having a transparent plastic film inserted, which is free from such external appearance defect.

The present invention relates to the use of a plastic film in a curved laminated glass, the curved laminated glass being prepared by laminating a glass plate, an interlayer film, the plastic film, an-interlayer film, and a glass plate in this order, the curved laminated glass being characterized in that an infrared reflective film is formed by stacking dielectric films on the plastic film, that the plastic film having the infrared ray reflective film formed satisfies any one condition of the following (A), (B) and (C),
(A) thermal contraction percentage of the infrared ray reflective film formed plastic film is in a range of 0.5-3% in a temperature range of 90-150°C;
(B) elastic modulus of the infrared ray reflective film-included plastic film is in a range of 30-2000MPa in a temperature range of 90-150°C; and
- (C) elongation percentage of the infrared ray reflective film-included plastic film is less than 0.3% when a tension of 10N is added per 1m width of the plastic film in a temperature range of 90-150°C,
wherein a hard coating film is formed between the plastic film and the infrared ray reflective film.

### BRIEF DESCRIPTION OF THE DRAWINGS

Fig. 1 is a schematic sectional view showing a structure of the plastic film-inserted laminated glass;
Fig. 1a is a schematic sectional view showing a structure of the plastic film-inserted laminated glass prepared in Example 1;
Fig. 1b is a schematic sectional view showing a structure of the plastic film-inserted laminated glass prepared in Comparative Example 1;
Fig. 2 is a schematic sectional view of the infrared ray reflective film-included plastic film, showing a structure of the infrared ray reflective film obtained by stacking dielectric films;
Fig. 2a is a schematic sectional view of the infrared ray reflective film-included plastic film used in Example 1;
Fig. 2b is a schematic sectional view of the infrared ray reflective film-included plastic film used in Comparative Example 1;
Fig. 3 is a schematic sectional view showing another embodiment of the infrared ray reflective film-included plastic film;
Fig. 4 is a view for explaining measurement of thermal contraction percentage;
Fig. 5 is a schematic sectional view showing another embodiment of the infrared ray reflective film-included plastic film;
Fig. 5a is a schematic sectional view of the infrared ray reflective film-included plastic film used in Example 10;
Fig. 6 is a schematic sectional view showing a structure of the plastic film-inserted laminated glass;
Fig. 6a is a schematic sectional view showing a structure of the plastic film-inserted laminated glass prepared in Example 10;
Fig. 7 is a schematic sectional view showing a structure of the plastic film-inserted laminated glass;
Fig. 8 is a schematic sectional view showing a structure of the plastic film-inserted laminated glass;
Fig. 9 is a schematic sectional view showing another embodiment of the infrared ray reflective film-included plastic film; and
Fig. 10 is a schematic sectional view showing a structure of the plastic film-inserted laminated glass.

### DETAILED DESCRIPTION

The present invention, in a laminated glass prepared by interposing a plastic film between two interlayer films, makes it possible to provide a plastic film-inserted laminated glass in which the plastic film has no creases and practical use is possible.

Furthermore, the present invention, in a curved laminated glass prepared by interposing an infrared ray reflective film-included plastic film, makes it possible to provide a good plastic film-inserted laminated glass in which creases of the plastic film and cracks of the infrared ray reflective film do not occur.

In particular, the present invention makes it possible to prepare a plastic film-inserted laminated glass in which creases of the plastic film and cracks of the infrared ray reflective film do not occur, even if it is a curved glass, such as an automotive front windshield, which partially has a curved surface such as one of which radius of curvature is in a range of 0.9m to 3m, and which has a curved surface shape that the change of radius of curvature according to position is complicated.

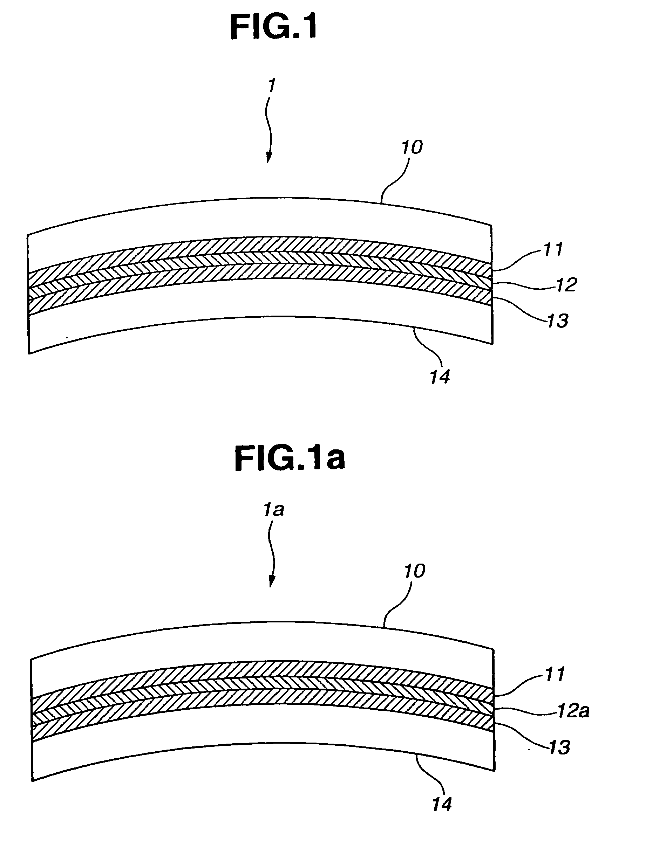

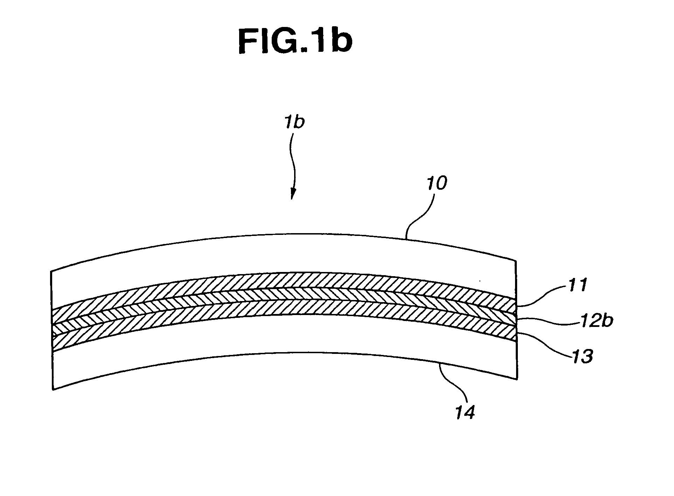

As shown in Fig. 1, a plastic film-inserted laminated glass may have a structure in which an infrared ray reflective film-included plastic film 12, interposed between interlayer films 11 and 13, is inserted between two glass plates 10 and 14.

A plastic film-inserted laminated glass is one in which the two glass plates 10 and 14 and the infrared ray reflective film-included plastic film 12 are firmly formed into a monolithic body by the interlayer films 11 and 13.

For the glass plates 10 and 14, it is simple to use a soda lime glass by float method, which is obtained with low cost.

Regarding curved surface shape of the curved glass plate, it is a spherical surface or ellipsoidal spherical surface or a glass plate that is different in radius of curvature according to position.

It is desirable that radius of curvature of the curved glass plate is 0.9m to 3m.

If radius of curvature is less than 0.9m, there is a tendency in preparing a laminated glass to have creases of the plastic film and cracks of the reflective film of infrared rays. Therefore, it is desirable that radius of curvature is 0.9m or greater. If radius of curvature becomes around 3m, it is nearly a flat surface. It is possible by the present invention to expect a considerable effect to prevent the occurrence of creases.

The present invention is not limited to a radius of curvature of 3m or less.

For the interlayer films 11 and 13, a hot-melt type adhesive, such as polyvinylbutyral (PVB) and ethylene vinyl acetate (EVA), is preferably used.

The plastic film increases in softness by high temperature. Therefore, when it is subjected to thermal adhesion by the interlayer films through having high temperature and high pressure by autoclave in a process for producing a laminated glass, while it is interposed between the interlayer films, it becomes a high temperature condition of 90-150°C. With this, creases tend to occur on the plastic film.

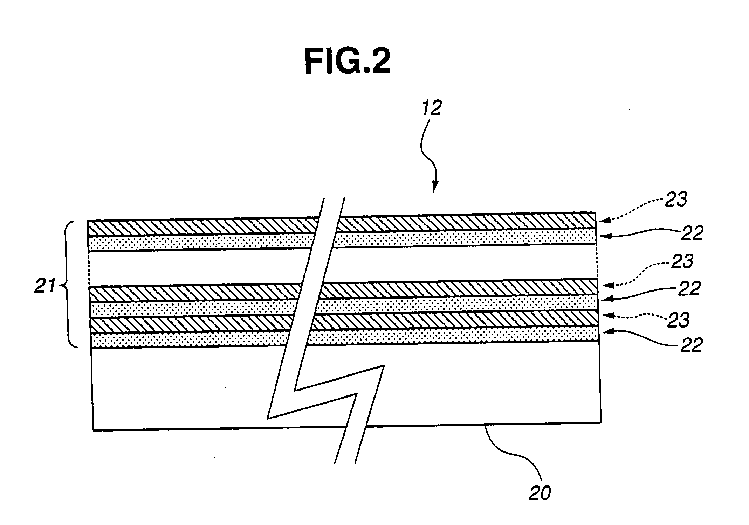

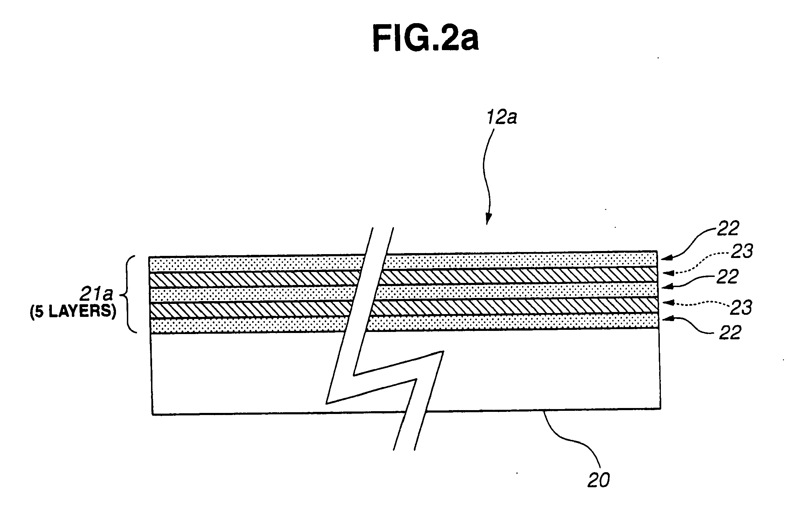

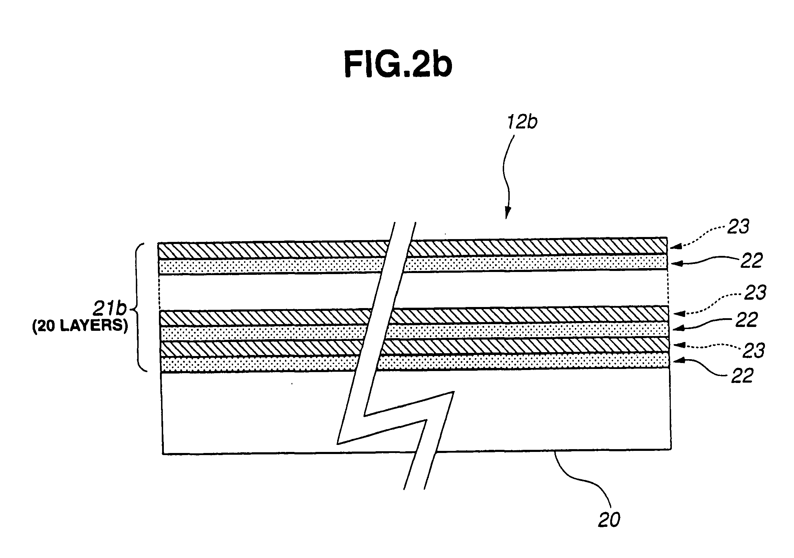

As an infrared ray reflective film formed of a dielectric multilayer film, for example, as shown in Fig. 2, there may be used an infrared ray reflective film 21 by using dielectrics different in refractive index in a manner to have even-numbered dielectric films 22 and odd-numbered dielectric films 23 by counting from the plastic film 20. Fig. 2 shows an example of the case that the number of layers of the multilayered film is an even number. In case that the number of layers is an odd number, the top layer becomes an odd-numbered dielectric film 23.

It is preferable as the dielectric film to select and use one having a suitable refractive index from dielectrics of TiO₂, Nb₂O₅ Ta₂O₅, SiO₂, Al₂O₃, ZrO₂, and MgF₂.

If the number of layers of the dielectric films to be stacked is three or less, reflection in near-infrared ray region is insufficient. If the number of layers exceeds 12, the production cost becomes high. Furthermore, the increase of the number of the films increases film stress, makes adhesion of the dielectric films inferior, or curls the film. Therefore, it is preferable that the total number of the dielectric films to be stacked is four layers or more and eleven layers or less. As the number of the layers increases, the maximum value of reflection in near-infrared ray region becomes greater, and the color of visible light region become close to colorless, resulting in a preferable infrared ray reflective film.

Furthermore, it is possible to suppress heat penetration to the transmission side from the incidence side by radiation and to transmit various radio waves used for communication, etc. due to that reflectance of wavelength of 2000nm or greater is less than 50%, by making the infrared ray reflective film 21 formed of a dielectric multilayered film into an infrared ray reflective film having a maximum value of reflection that exceeds 50% in a wavelength region of 1200nm to 1400nm.

According to the present invention in the used plastic film-inserted laminated glass the infrared ray reflective film-included plastic film 12 has any one of the characteristics shown in the following (A), (B) or (C), since it is possible to obtain a plastic film-inserted laminated glass in which the infrared ray reflective film-included plastic film 12 has no creases,
(A) thermal contraction percentage of the infrared ray reflective film-included plastic film 12 is in a range of 0.5-3% in a temperature range of 90-150°C;
(B) elastic modulus of the plastic film 20 is in a range of 30-2000MPa in a temperature range of 90-150°C; and
(C) elongation percentage of the plastic film 20 is 0.3% or less when a tension of 10N is added per 1m width of the plastic film in a temperature range of 90-150°C.

In order to use a plastic film-inserted laminated glass of the present invention as a window member, it is preferable to use a plastic film having transparency. For the plastic film 20, it is possible to preferably use polyester films such as polyethylene terephthalate (PET) film and polyethylene naphthalate film, polyimide film, TAC film, nylon film, polycarbonate film, polymethyl methacrylate, polyether sulfone, polyarylate, cycloolefin polymer, etc.

In particular, a crystalline polyethylene terephthalate film (PET film) that is formed into a film by two-axis elongation method can preferably be used for the plastic film 20, since it is superior in heat resistance to be usable in a wide-range temperature environment, is high in transparency, and is stable in quality due to its mass production.

If the plastic film 20 has a thickness less than 30µm, it is difficult to handle the film, and it tends to be curled by stresses of the infrared ray reflective film and the after-mentioned hard coating film. On the other hand, if it is thicker than 200µm, an external appearance defect occurs due to deaeration inferiority upon lamination process. Therefore, it is desirable to have a thickness of 30µm-200µm.

It is desirable to select and use an infrared ray reflective film-included plastic film 12, after forming the infrared ray reflective film 21 on the plastic film 20, which is one that (A) thermal contraction percentage is in a range of 0.5-3% in a temperature range of 90-150°C.

If thermal contraction percentage of the infrared ray reflective film-included plastic film 12 in 90-150°C is less than 0.5%, the infrared ray reflective film-included film becomes loose at the curved glass peripheral portion, thereby generating an external appearance defect to cause creases.

If thermal contraction percentage is greater than 3%, the infrared ray reflective film cannot endure contraction of the film, thereby generating an external appearance defect to cause cracks.

Therefore, in order to prevent the occurrences of creases of the heat ray reflective film-included plastic film 12 and cracks of the infrared ray reflective film 21 in the lamination process, it is preferable that thermal contraction of the infrared ray reflective film-included plastic film 12 is in a range of 0.5-3% in a temperature range of 90-150°C, and it is more preferable that thermal contraction of the infrared ray reflective film-included plastic film 12 in 90-150°C is in a range of 0.5-2%.

In a transparent plastic film, a plastic film prepared by an elongation method such as successive two-axis elongation method has a stress upon film formation remaining in the inside of the film and tends to be contracted by stress relief by thermal treatment. Therefore, it can preferably be used.

In order that the plastic film 20 does not have creases even if it becomes a high temperature condition of 90-150°C in a high temperature, high pressure treatment by autoclave, it is desirable that (B) elastic modulus of the plastic film 20 is 30MPa-2000MPa, more preferably 30MPa-500MPa, in a temperature range of 90-150°C.

Elastic modulus of the plastic film 20 can be determined from a stress-strain curve in a temperature range of 90-150°C by using a viscoelasticity measurement apparatus. If elastic modulus of the plastic film 20 is less than 30MPa, the film tends to be deformed by a small external force, and an external appearance defect in the form of creases tends to occur on the entire surface of the laminated glass. If elastic modulus of the plastic film is greater than 2000MPa, in the case that it is applied to a three-dimensionally curved glass, deaeration inferiority tends to caused due to an incomplete release of air between the interlayer film and the plastic film in a high-temperature, high-pressure treatment by autoclave.

Alternatively, in order that the plastic film does not have creases even if it becomes a high temperature condition of 90-150°C in a high-temperature, high-pressure treatment by autoclave, it is desirable that (C) elongation percentage of the plastic film 20 is 0.3% or less when a tension of 10N is added per 1m width of the plastic film 20 in a high temperature range of 90-150°C.

A tension of 10N added per 1m width of the plastic film 20 corresponds to a tension that occurs on the plastic film and tries to extend the plastic film, when the plastic film and the glass plates are subjected to thermal adhesion by the interlayer films, while the plastic film interposed between the interlayer films is subjected to high temperature and high pressure by autoclave.

Elongation percentage of the plastic film is measured by the following steps 1-5.

Step 1: The plastic film is cut out to have a length of 15mm × a width of 5mm as a measurement sample. Fixing jigs are attached to both ends of the measurement sample, and the measurement sample between the fixing jigs at both ends is set to have an exposure length of 10mm.

Step 2: Add a load of a tension of 10N, per 1m width of the plastic film, to the measurement sample. In the case of the measurement sample shown in the Step 1, add a load of 0.05N.

Step 3: Measure the length L₀ of the measurement sample between the fixing jigs.

Step 4: Heat it at 5°C/min. to a predetermined measurement temperature in a range of 90-150°C, and measure the length L between the fixing jigs of the measurement sample at the measurement temperature.

Step 5: Calculate elongation percentage (%) by (L₀-L)/L×100.

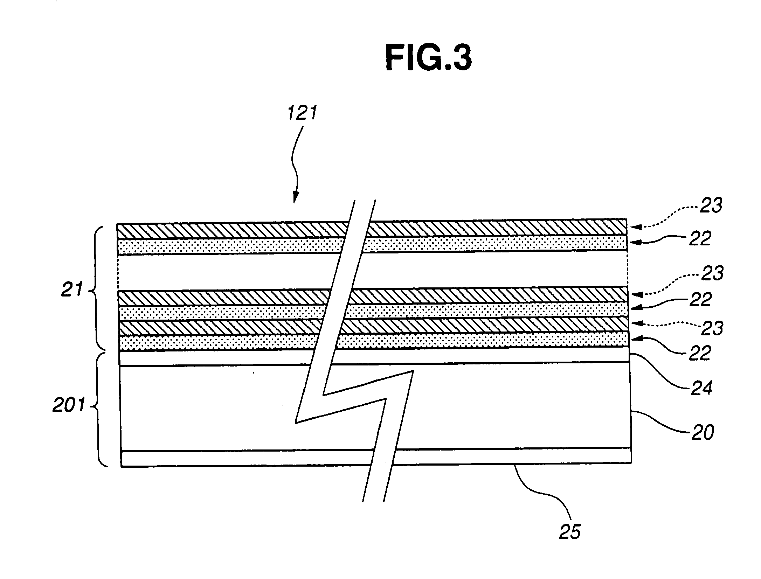

Furthermore, as shown in Fig. 3, it is preferable that a film 25 of silane coupling agent is formed on the surface on which the infrared ray reflective film 21 of the plastic film 20 is not formed.

The silane coupling agent is one for making adhesion between the plastic film 20 and the interlayer films 11, 13 superior. It is possible to use silane coupling agents having amino group, isocyanate group, epoxy group, etc.

Furthermore, a hard coating film 24 is formed between the plastic film 20 and the infrared ray reflective film 21.

Depending on the plastic film to be inserted between the interlayer films, its adhesion with the resin interlayer film may be inferior, or it may be clouded by forming the infrared ray reflective film. These defects are solved by forming the hard coating film 24 at the interface.

Still furthermore, it is desirable that visible light transmittance defined in JIS R3106-1998 of plastic film-inserted laminated glass is 70% or greater in order to produce a comfortable, bright interior space by introducing visible light of the sunlight into the interior.

In the case of using a plastic film-inserted laminated glass of the present invention as an automotive front windshield, it is important that visible light ray transmittance defined in JIS R3211 is 70%.

It is possible to improve heat insulation property of the present invention by using a heat absorbing glass as the glass plate.

### EXAMPLES

The following Examples 1-4 are illustrative of the condition (A) of the present invention, Examples 5-7 are illustrative of the condition (B), and Examples 8-10 are illustrative of the condition (C).

### EXAMPLE 1 (not according to the invention)

An infrared ray reflective film-included plastic film 12a was prepared by using a 50µm thick PET film as a plastic film 20.

As the heat ray reflective film that is a film different in refractive index, TiO₂ film was used as a dielectric film 22, SiO₂ film was used as a dielectric film 23, and TiO₂ film (thickness: 105nm), SiO₂ film (thickness: 175nm), TiO₂ film (thickness: 105nm), SiO₂ film (thickness: 175nm), and TiO₂ film (thickness: 105nm) were sequentially formed by sputtering to form an infrared ray reflective film 21a.

Thermal contraction percentages of the infrared ray reflective film-included plastic film prepared by the present example were 1.5% in MD direction and 1% in TD direction.

Thermal contraction was measured in accordance with JIS C 2318, as follows.

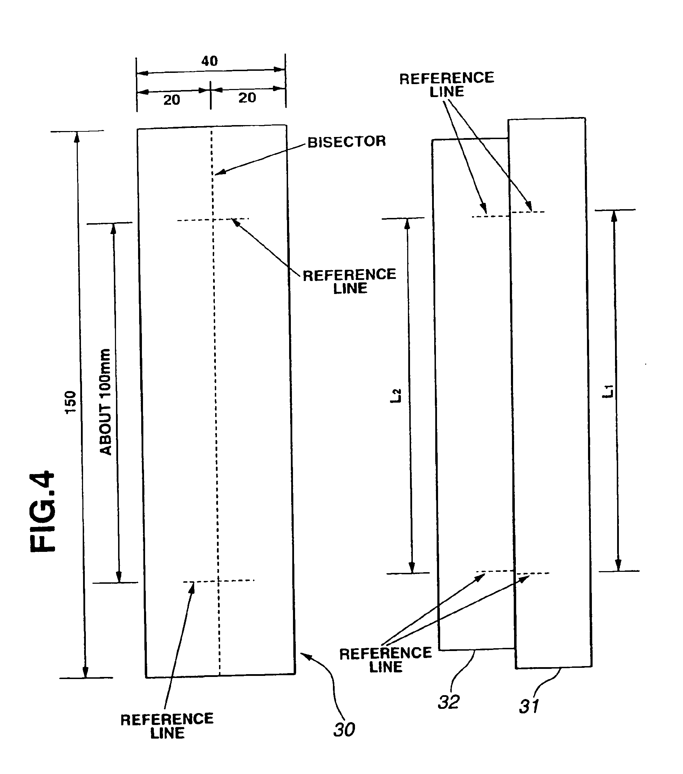

As shown in Fig. 4, a rectangular film 30 of 150mm length × 40mm width was cut out, and reference lines were drawn at around centers in each width direction by using a diamond pen to put a distance of about 100mm. After drawing the reference lines, the rectangular film 30 was cut in half to 150mm×20mm.

One test piece halved was vertically hung in a hot-air circulating thermostat oven, temperature was raised to a measurement temperature of 130°C at a temperature raising rate of about 5°C/min, and it was maintained at the measurement temperature for about 30 minutes.

Then, the hot-air circulating thermostat oven was opened to the air to conduct natural cooling at about 20°C/min, and it was maintained at room temperature for 30 minutes.

A thermocouple thermometer was used for measuring temperature, and temperature distribution in the hot-air circulating thermostat oven was set within ±1°C.

Of the test pieces halved, each of the test piece 31 maintained at room temperature and the test piece 32 heated at the measurement temperature was subjected to the measurement of the distance L1, L2 between the reference lines by using a scanning laser microscope 1LM21D made by Lasertec Corporation.

Thermal contraction percentage (%) was calculated by (L1-L2)/L1×100.

Three of the rectangular films 30 were cut out for each of MD direction and TD direction of PET film. The average value of thermal contraction percentages measured for the three was used as thermal contraction percentage.

The infrared ray reflective film-included plastic film 12a having the infrared ray reflective film 21a formed was interposed between two PVB films having a thickness of 0.38mm. Furthermore, a laminated glass was prepared by using two curved glass plates 10, 14 (the minimum value of radius of curvature is 0.9m, and the maximum value 1m) of the same shape having dimensions of 250mmx350mm and a thickness of 2mm.

The curved glass plates 10, 14 are those prepared by bending float glass. The minimum value of 0.9m of radius of curvature is a value at around a peripheral portion of the glass plates 10, 14, and the maximum value of 1m of radius of curvature is a value at a center portion of the glass plates 10, 14.

The glass plate 10, the PVB film 11, the infrared ray reflective film-included plastic film 12a having the infrared ray reflective film formed, the PVB film 13, and the glass plate 14 were sequentially laminated. Excessive portions of the PVB films 11, 13 and the infrared ray reflective film-included, infrared ray reflective film-included plastic film 12a having the infrared ray reflective film formed were cut and removed, followed by a lamination treatment by pressurization and deaeration for 30 minutes in an autoclave heated to 150°C.

The prepared plastic film-inserted laminated glass 1a (Fig. 1a) was free from creases of the infrared ray reflective film-included plastic film and cracks of the infrared ray reflective film. It was possible to obtain a plastic film-inserted laminated glass having a good external appearance.

There was obtained the laminated glass well reflecting infrared ray, and having the maximum value of reflection in a wavelength of 900nm to 1200nm and its maximum reflectance of 60% or greater. Its infrared ray reflective characteristics were almost the same as those possessed by the infrared ray reflective film-included plastic film prior to the lamination process.

### EXAMPLE 2

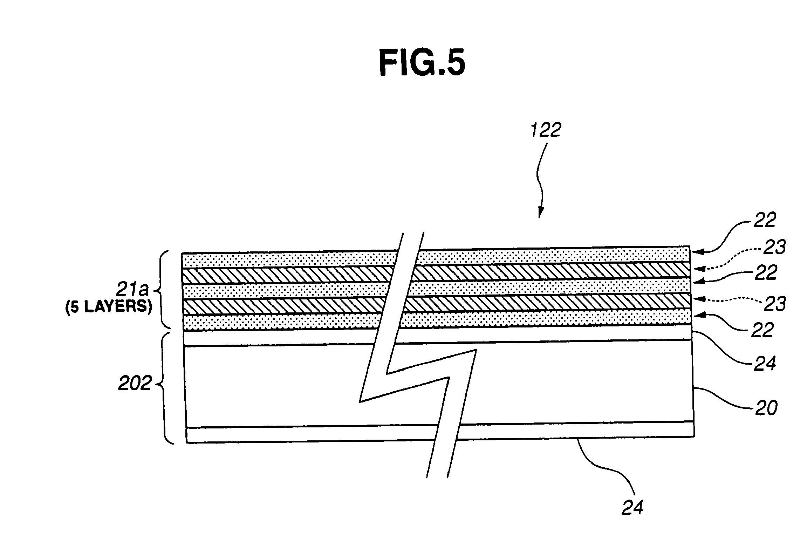

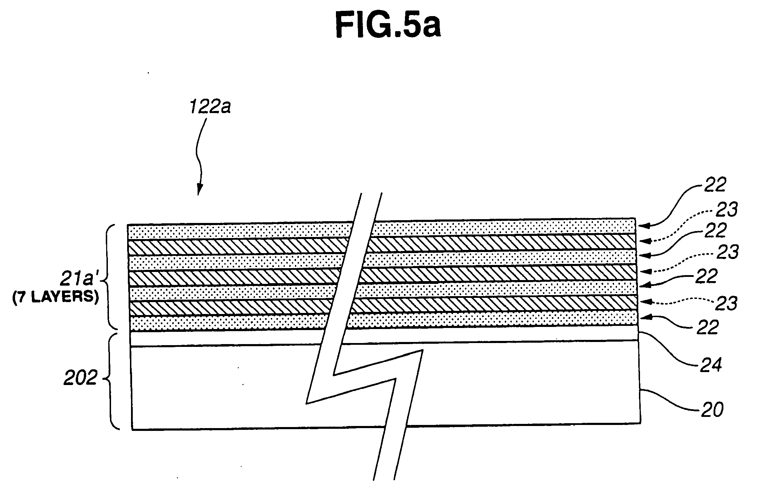

A PET film having a thickness of 100µm was used for the plastic film 20. Acrylic-series hard coating layers 24 were formed with a thickness of 5µm on both surfaces of the plastic film 20. Furthermore, the same infrared reflective film 21a as that of Example 1 was formed on one surface of the plastic film 202 having the hard coating layer 24 formed, thereby preparing an infrared ray reflective film-included plastic film 122 shown in Fig. 5.

Thermal contraction percentage of this infrared ray reflective film-included plastic film 122 was measured in the same way as that of Example 1. With this, it was 1.5% in MD direction and 1% in TD direction.

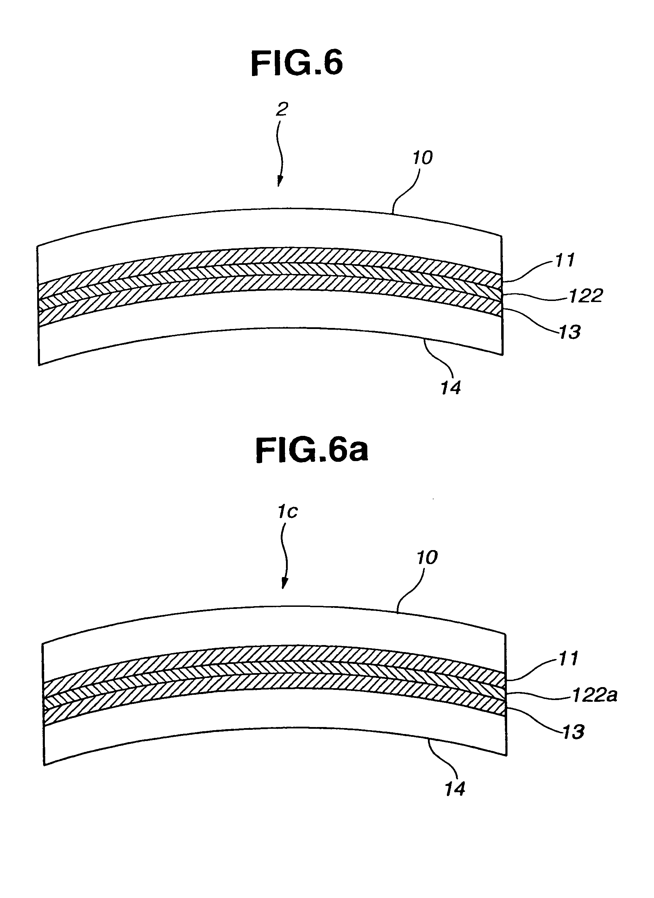

Furthermore, a plastic film-inserted laminated glass 2 shown in Fig. 6 was prepared by using this heat ray reflective film-included plastic film 122 in the same way as that of Example 1.

As the glass plate 10, 14, there was used a curved float glass having the same dimensions and the same thickness as those of Example 1 and a radius of curvature of 2.8m to 3m.

Similar to Example 1, the plastic film-inserted laminated glass 2 of the present example was also free from creases of the heat ray reflective film-included plastic film and cracks of the infrared ray reflective film. Thus, there was obtained a plastic film-inserted laminated glass having a good external appearance.

### EXAMPLE 3

A PET film used in Example 1 was used for the plastic film 20. Acrylic-series hard coating layers 24 were formed with a thickness of 2µm on both surfaces of this plastic film 20 to make a plastic film 202. Furthermore, a heat ray reflective film 21a was formed on one surface of this plastic film 202 in the same way as that of Example 1, thereby preparing an infrared ray reflective film-included plastic film 122 shown in Fig. 5.

Thermal contraction percentage of this infrared ray reflective film-included plastic film 122 was measured in the same way as that of Example 1. With this, it was 1% in MD direction and 0.6% in TD direction.

Furthermore, a plastic film-inserted laminated glass 2 shown in Fig. 6 was prepared by using this infrared ray reflective film-included plastic film 122 in the same way as that of Example 1.

The plastic film-inserted laminated glass 2 of the present example was also free from creases of the infrared ray reflective film-included plastic film and cracks of the infrared ray reflective film. Thus, there was obtained a plastic film-inserted laminated glass having a good external appearance.

### EXAMPLE 4

As the plastic film 20, there was used a PET film having thermal contraction percentages at 150°C of 4% in MD direction and 3.5% in TD direction and a thickness of 100µm. Similar to Example 3, acrylic-series hard coating layers 24 were formed on this PET film by a thickness of 2µm, and at the same time a heat treatment was conducted at 50°C, thereby making a plastic film 202. An infrared ray reflective film that was the same as that Example 1 was formed on this plastic film 202, thereby preparing an infrared ray reflective film-included plastic film 122.

Thermal contraction percentage of this infrared ray reflective film-included plastic film 122 was measured in the same way as that of

### Example 1. With this, it was 2.0% in MD direction and 1.6% in TD direction.

The plastic film-inserted laminated glass 102 prepared in the present example was free from creases of the heat ray reflective film-included plastic film and cracks of the infrared ray reflective film. Thus, there was obtained a plastic film-inserted laminated glass having a good external appearance.

### COMPARATIVE EXAMPLE 1

A PET film used in Example 1 was used for the plastic film 20. A heat ray reflective film obtained by alternately forming 20 layers of dielectric films 22 and 23 that were the same as those of Example 1, thereby preparing an infrared ray reflective film-included plastic film 12b.

Thermal contraction percentage at 150°C of this infrared ray reflective film-included plastic film 12b was measured in the same way as that of Example 1. With this, it was 0.4% in MD direction and 0.2% in TD direction.

Furthermore, similar to Example 1, a plastic film-inserted laminated glass 1 was prepared by using this heat ray reflective film-included and infrared ray reflective film-included plastic film 12b (Fig. 1b).

Creases of the heat ray reflective film-included plastic film were observed at a peripheral portion of the prepared plastic film-inserted laminated glass 1. Due to external appearance inferiority, it was not suitable for practical use.

### COMPARATIVE EXAMPLE 2

As the plastic film 20, there was used a PET film having thermal contraction percentages at 150°C of 1.0% in MD direction and 0.5% in TD direction and a thickness of 100µm. Similar to Example 3, an acrylic-series hard coating layer 24 was formed on this PET film by a thickness of 2µm, thereby making a plastic film 202. An infrared ray reflective film that was the same as that of Example 1 was formed on this plastic film 202, thereby preparing an infrared ray reflective film-included plastic film 122.

Thermal contraction percentage of this infrared ray reflective film-included plastic film 122 was measured in the same way as that of Example 1. With this, it was 0.3% in MD direction and 0.2% in TD direction.

Furthermore, similar to Example 1, a plastic film-inserted laminated glass 2 having a structure shown in Fig. 5 was prepared by using this infrared ray reflective film-included plastic film 122.

Creases of the heat ray reflective film-included plastic film 2 were observed at a peripheral portion of the prepared plastic film-inserted laminated glass 2. Due to external appearance inferiority, practical use was difficult. At a portion on which the creases were generated, cracks were observed in the infrared ray reflective film 21, too.

### COMPARATIVE EXAMPLE 3

As the plastic film 20, there was used a PET film having thermal contraction percentages at 150°C of 8% in MD direction and 7% in TD direction and a thickness of 100µm. Similar to Example 3, an acrylic-series hard coating layer 24 was formed on this PET film by a thickness of 2µm, thereby making a plastic film 202. An infrared ray reflective film that was the same as that of Example 1 was formed on this plastic film 202, thereby preparing an infrared ray reflective film-included plastic film 122.

Thermal contraction percentage of this infrared ray reflective film-included plastic film 122 was measured in the same way as that of Example 1. With this, it was 7% in MD direction and 6% in TD direction.

Furthermore, similar to Example 1, a plastic film-inserted laminated glass 2 having a structure shown in Fig. 6 was prepared by using this infrared ray reflective film-included plastic film 122.

In the prepared plastic film-inserted laminated glass 2, the heat ray reflective film-included plastic film 122 was free from a defect in the form of creases, but cracks occurred on the entire surface of the infrared ray reflective film. Therefore, practical use was difficult.

### COMPARATIVE EXAMPLE 4

Example 1 was repeated except in that, as the glass plates 10, 14, two curved glass plates of the same shape were used, in which they had dimensions of 250mmx350mm and a thickness of 2mm, in which radius of curvature at around the peripheral portion had a minimum value of 0.7m, and in which radius of curvature at the center portion was 0.8m, thereby preparing a plastic film-inserted laminated glass 1.

At the peripheral portion of the prepared plastic film-inserted laminated glass, creases of the heat ray reflective film-included plastic film were observed. Due to external appearance defect, it was not suitable for practical use.

### EXAMPLE 5 (not according to the invention)

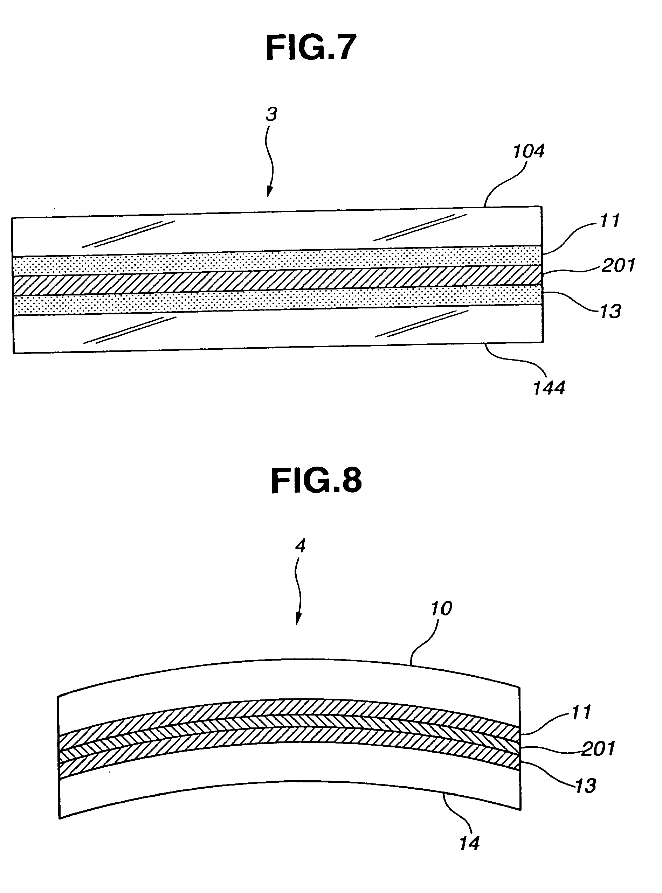

There was prepared a plastic film-inserted laminated glass 3 shown in Fig. 7. Using two flat glass plates 104, 144 of 300mmx300mm and a thickness of 2mm and two PVB films 11, 13 of a thickness of 0.38mm, a plastic film 201 was interposed between the PVB films 11, 13. As the plastic film 201, there was used a polyethylene terephthalate film (PET film) (thickness: 50µm) having an elastic modulus of 40MPa at 130°C.

On the glass plate 144, the PVB film 13, the PET film 201, and the PVB film 11 were sequentially laminated, and the glass plate 104 was formed at last. After cutting and removing excessive portions of the PVB films 11, 13 and the PET film 201 projecting from the edge portion of the glass plates, there was conducted a lamination treatment by pressurization and deaeration for 30 minutes in an autoclave heated to 130°C, thereby obtaining a plastic film-inserted laminated glass 3 having a good external appearance.

### EXAMPLE 6 (not according to the invention)

As shown in Fig. 8, a plastic film-inserted laminated glass 4 was prepared by using curved glass plates. As the curved glass plates 10, 14, two glass plates were used, having a radius of curvature of 1200mm, dimensions of 250mmx350mm, and a thickness of 2mm.

A plastic film-inserted laminated glass 4 was prepared in the same way as that of Example 5, except in that curved glass plates were used. The plastic film-inserted laminated glass 4 prepared in the present example was also a plastic film-inserted laminated glass with no creases observed and with a good external appearance.

### EXAMPLE 7

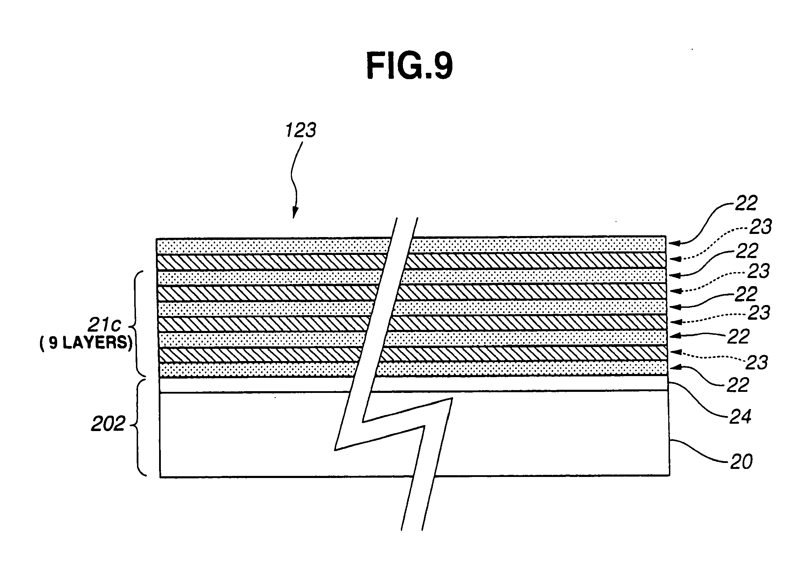

An infrared ray reflective film 21 was formed by stacking a hard coating film and dielectric films on one surface of a PET film 20 having a thickness of 100µm to make an infrared ray reflective film-included plastic film 123 shown in Fig. 9.

The hard coating film of acrylic series was formed on one surface of the plastic film by a thickness of 5µm.

In the dielectric films, counting from the side of PET film 20, SiO₂ film was used as an even-numbered dielectric film, and TiO₂ film was used as an odd-numbered dielectric film.

TiO₂ film (thickness: 105nm), SiO₂ film (thickness: 175nm), TiO₂ film (thickness: 105nm), SiO₂ film (thickness: 175nm), TiO₂ film (thickness: 105nm), SiO₂ film (thickness: 175nm), TiO₂ film (thickness: 105nm), SiO₂ film (thickness: 175nm) and TiO₂ film (thickness: 105nm) were sequentially formed on the hard coating film to make the infrared reflective film 21c.

Elastic modulus at 130°C of the present hard coating film and the infrared ray film-included plastic film 123 was 1000MPa.

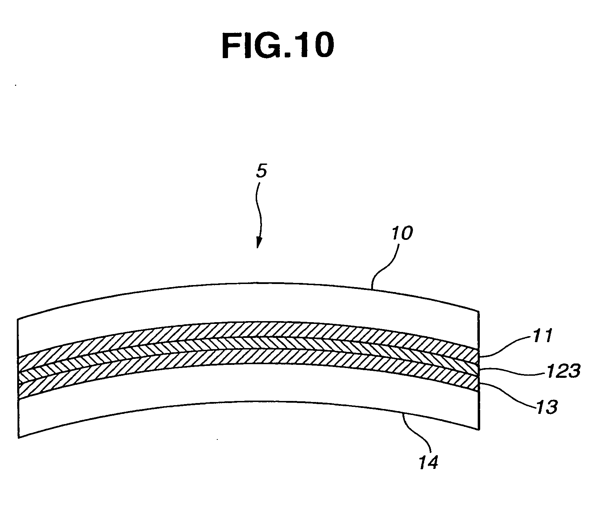

Example 6 was repeated to prepare a plastic film-inserted laminated glass 5 having a structure shown in Fig. 10, except in that the infrared ray reflective film-included plastic film 123 was used.

The plastic film-inserted laminated glass 5 of the present example also had a good external appearance with no creases observed.

### COMPARATIVE EXAMPLE 5

Example 5 was repeated to prepare a plastic film-inserted laminated glass 3, except in that a PET film having an elastic modulus of 20MPa at 130°C was used as the plastic film 201. An external appearance defect in the form of creases occurred on the entire surface of the plastic film-inserted laminated glass prepared in the present comparative example.

### COMPARATIVE EXAMPLE 6

Example 7 was repeated to prepare an infrared ray reflective film-included, plastic film-inserted laminated glass 5, except in that a PET film having an elastic modulus of 3000MPa at 130°C was used as the plastic film 20.

The plastic film-inserted laminated glass 5 prepared in the present comparative example turned into a condition of deaeration inferiority in which air remained between the PVB and the plastic film of a glass center portion.

### EXAMPLE 8 (not according to the invention)

A plastic film-inserted laminated glass shown in Fig. 7 was prepared. As the glass plates 104, 144, flat glass plates of 300mmx300mm and a thickness of 2mm and made of soda-lime glass by float method were used.

A PET film (thickness: 100µm) was used as the plastic film 201. Elongation percentage of this PET film measured in a condition in which a tension of 10N was loaded at a measurement temperature of 150°C per 1m width of the film was 0.02% in MD direction and 0.13% in TD direction.

The measurement of elongation percentage was conducted according to Step 1 to Step 5 using a thermomechanical analyzer (PTC10A) made by Rigaku Corporation.

As the interlayer films 114, 134, hot melt adhesive films of a thickness of 0.38mm and made of PVB were used.

The glass plate 144, the interlayer film 134, the plastic film 201, the interlayer film 114, and the glass plate 104 were sequentially laminated. After cutting and removing excessive portions of the interlayer film 114, the plastic film 201 and the interlayer film 134 projecting from the edge portion of the glass plates, there was conducted a lamination treatment by pressurization and deaeration together with a heating to 150°C for 30 minutes in an autoclave, thereby preparing a plastic film-inserted laminated glass 3.

The prepared plastic film-inserted laminated glass 3 was free on the plastic film 201 from an external appearance defect in the form of creases, thereby obtaining a plastic film-inserted laminated glass having a good external appearance.

### EXAMPLE 9 (not according to the invention)

Example 8 was repeated to prepare a plastic film-inserted laminated glass 4 shown in Fig. 8 except in that glass plates of soda-lime glass of 250mmx300mm, a thickness of 2mm, and a radius of curvature of 1200mm, and made by a bending process and a float method were used as glass plates 10,14.

Similar to Example 8, the prepared plastic film-inserted laminated glass 4 was free on the plastic film 201 from an external appearance defect in the form of creases, thereby obtaining a plastic film-inserted laminated glass having a good external appearance.

### EXAMPLE 10

Example 8 was repeated to prepare a plastic film-inserted laminated glass 1c shown in Fig. 6a, except in that an infrared ray reflective film-included plastic film 122a shown in Fig. 5a was used in place of the plastic film 201.

The infrared ray reflective film-included plastic film 122a was prepared, as follows.

Acrylic hard coating films 24 were formed on both sides of the PET film 20 by a thickness of 5µm. Furthermore, the infrared ray reflective film 21a' was formed by sequentially forming a Nb₂O₅ film (thickness: 115nm), a SiO₂ film (thickness: 175nm), a Nb₂O₅ film (thickness: 115nm), a SiO₂ film (thickness: 175nm), a Nb₂O₅ film (thickness: 115nm), a SiO₂ film (thickness: 175nm), and a Nb₂O₅ film (thickness: 115nm) by sputtering on one surface of the PET film 20 having the hard coating layer formed, and by using Nb₂O₅ film as the dielectric film 22 and SiO₂ film as the dielectric film 23.

Elongation percentage (a condition in which a tension of 10N was loaded per 1m width of the film) at 150°C of the infrared ray reflective film-included plastic film 122a having the hard coating film 24 and the infrared ray reflective film 21a' formed was less than 0.01% in MD direction and 0.19% in TD direction.

Using the infrared ray reflective film-included plastic film 122a, similar to Example 8, the glass plate 14, the interlayer film 13, the infrared ray reflective film-included plastic film 122a, the interlayer film 11, and the glass plate 10 were sequentially laminated, followed by a lamination process by pressurization and deaeration together with heating at 150°C for 30 minutes in an autoclave, thereby preparing a plastic film-inserted laminated glass 1c shown in Fig. 6a.

The prepared plastic film-inserted laminated glass 2 was free on the infrared ray reflective film-included plastic film 122a from an external appearance defect in the form of creases. Thus, there was obtained a plastic film-inserted laminated glass having a good external appearance.

### COMPARATIVE EXAMPLE 7

Example 8 was repeated to prepare a plastic film-inserted laminated glass 3 shown in Fig. 7 except in that a PET film (thickness: 100µm) having an elongation percentage of 0.3% at 150°C was used as the plastic film 201.

An external appearance defect in the form of creases occurred on the entire surface of the prepared plastic film-inserted laminated glass.

### COMPARATIVE EXAMPLE 8

Example 9 was repeated to prepare a plastic film-inserted laminated glass 4 shown in Fig. 8 except in that a PET film (thickness: 100µm) having an elongation percentage of 0.3% at 150°C was used as the plastic film 201.

Similar to Comparative Example 7, an external appearance defect in the form of creases occurred on the entire surface of the prepared plastic film-inserted laminated glass 4.

### EXPLANATION OF SYMBOLS

1, 2, 3, 4, or 5: a plastic film-inserted laminated glass
1a, 1b or 1c: a plastic film-inserted laminated glass
10 or 14: a curved glass plate
11 or 13: an interlayer film
12, 121, 122 or 123: an infrared ray reflective film-included plastic film
12a, 12a', 12b, 12c or 122a: an infrared ray reflective film-included plastic film
20: a plastic film
21, 21a, 21a', 21b, or 21c: an infrared ray reflective film
22: an odd-numbered dielectric film
23: an even-numbered dielectric film
24: a hard coating film
25: a film of silane coupling agent
30: a rectangular film
31 or 32: a test sample
104 or 144: a flat glass plate

## Claims

1. Use of a plastic film in a curved laminated glass, the curved laminated glass being prepared by laminating a glass plate, an interlayer film, the plastic film, an interlayer film, and a glass plate in this order,
wherein the plastic film satisfies any one condition of the following (A), (B) and (C),
(A) thermal contraction percentage of the infrared ray reflective film-formed plastic film is in a range of 0.5-3% in a temperature range of 90-150°C;
(B) elastic modulus of the infrared ray reflective film-included plastic film is in a range of 30-2000MPa in a temperature range of 90-150°C; and
(C) elongation percentage of the infrared ray reflective film-included plastic film is less than 0.3% when a tension of 10N is added per 1m width of the plastic film in a temperature range of 90-150°C,
**characterized in that** an infrared reflective film is formed by stacking dielectric films on the plastic film, and
**in that** a hard coating film is formed between the plastic film and the infrared ray reflective film.

2. Use of a plastic film in a curved laminated glass, according to claim 1, wherein the infrared ray reflective film is a dielectric multilayer film prepared by alternately stacking 4 layers to 11 layers of dielectric films of low refractive index and dielectric films of high refractive index.

3. Use of a plastic film in a curved laminated glass, according to claim 1 or claim 2, wherein the dielectric film is a dielectric film formed of a dielectric selected from TiO₂, Nb₂O₅, Ta₂O₅, SiO₂, Al₂O₃, ZrO₂, and MgF₂.

4. Use of a plastic film in a curved laminated glass, according to any one of claim 1 to claim 3, wherein the glass plate is a curved glass plate having a radius of curvature of 0.9m to 3m.

5. Use of a plastic film in a curved laminated glass, according to any one of claim 1 to claim 4, wherein the plastic film is a plastic film prepared by an elongation method.

6. Use of a plastic film in a curved laminated glass, according to any one of claim 1 to claim 5, wherein thickness of the plastic film is 30µm to 200µm.

7. Use of a plastic film in a curved laminated glass, according to any one of claim 1 to claim 6, wherein the hard coating film is an acrylic series hard coating film.

## Patentansprüche

1. Verwendung eines Kunststofffilms in einem gebogenen laminierten Glas, wobei das gebogene laminierte Glas durch Laminieren einer Glasplatte, eines Zwischenfilms, des Kunststofffilms, eines Zwischenfilms und einer Glasplatte, in dieser Reihenfolge, hergestellt worden ist,
wobei der Kunststofffilm eine der nachfolgenden Bedingungen (A), (B) und (C) erfüllt:
(A) der Prozentsatz der thermischen Kontraktion des den Infrarotstrahlen reflektierenden Film enthaltenden Kunststofffilms liegt in einem Temperaturbereich von 90 bis 150°C in einem Bereich zwischen 0,5 bis 3%,
(B) das Elastizitätsmodul des den Infrarotstrahlen reflektierenden Film enthaltenden Kunststofffilms liegt in einem Temperaturbereich von 90 bis 150°C in einem Bereich zwischen 30 und 2.000 MPa und
(C) der Prozentsatz der Dehnung des den Infrarotstrahlen reflektierenden Film enthaltenden Kunststofffilms beträgt weniger als 0,3 %, wenn in einem Temperaturbereich zwischen 90 und 150°C eine Spannung von 10 N auf 1 m Breite des Kunststofffilms aufgebraucht wird,
**dadurch gekennzeichnet, dass** der Infrarotstrahlen reflektierende Film durch Stapeln von dielektrischen Filmen auf den Kunststofffilm gebildet worden ist, und dadurch,
dass zwischen dem Kunststofffilm und dem Infrarot reflektierenden Film ein harter Beschichtungsfilm ausgebildet worden ist.

2. Verwendung eines Kunststofffilms in einem gebogenen laminierten Glas nach Anspruch 1, wobei der Infrarotstrahlen reflektierende Film ein dielektrischer Mehrschichtfilm ist, welcher durch alternierendes Stapeln von 4 Schichten bis 11 Schichten dielektrischer Filme mit einem niedrigen Brechungsindex und dielektrischen Filmen mit einem hohen Brechungsindex hergestellt worden ist.

3. Verwendung eines Kunststofffilms in einem gebogenen laminierten Glas nach Anspruch 1 oder Anspruch 2, wobei der dielektrische Film ein dielektrischer Film ist, welcher aus Dielektrikum ausgewählt aus TiO₂, Nb₂O₅, Ta₂O₅, SiO₂, Al₂O₃, ZrO₂ und MgF₂ gebildet worden ist.

4. Verwendung eines Kunststofffilms in einem gebogenen laminierten Glas nach einem der Ansprüche 1 bis 3, wobei die Glasplatte eine gebogene Glasplatte mit einem Radius der Biegung von 0,9 m bis 3 m ist.

5. Verwendung eines Kunststofffilms in einem gebogenen laminierten Glas nach einem der Ansprüche 1 bis 4, wobei der Kunststofffilm ein durch ein Dehnungsverfahren hergestellter Kunststofffilm ist.

6. Verwendung eines Kunststofffilms in einem gebogenen laminierten Glas nach einem der Ansprüche 1 bis 5, wobei die Dicke des Kunststofffilms 30 µm bis 200 µm beträgt.

7. Verwendung eines Kunststofffilms in einem gebogenen laminierten Glas nach einem der Ansprüche 1 bis 6, wobei der harte Beschichtungsfilm ein harter Beschichtungsfilm aus der Acryl-Reihe ist.

## Revendications

1. Utilisation d'un film plastique dans un verre feuilleté incurvé, le verre feuilleté incurvé étant préparé par dépôt par superposition dans l'ordre qui suit d'une plaque de verre, d'un film intercouche, d'un film plastique, d'un film intercouche et d'une plaque de verre,
dans laquelle le film plastique satisfait à l'une quelconque des conditions (A), (B) et C suivantes :
(A) le pourcentage de contraction thermique du film plastique formé par un film réfléchissant le rayonnement infrarouge se trouve dans une plage de 0,5 à 3 % dans une plage de température de 90 à 150°C ;
(B) le module d'élasticité du film plastique inséré réfléchissant le rayonnement infrarouge se trouve dans une plage de 30 à 2000 MPa dans une plage de température de 90 à 150°C ; et
(C) le pourcentage d'allongement du film plastique inséré réfléchissant le rayonnement infrarouge est inférieur à 0,3 % lorsqu'une tension de 10N est ajoutée par largeur de 1 m du film plastique dans une plage de température de 90 à 150°C,
**caractérisée en ce qu'**un film réfléchissant le rayonnement infrarouge est formé en empilant des films diélectriques sur le film plastique, et
**en ce qu'**un film de revêtement dur est formé entre le film plastique et le film réfléchissant le rayonnement infrarouge.

2. Utilisation d'un film plastique dans un verre feuilleté incurvé, selon la revendication 1, dans laquelle le film réfléchissant le rayonnement infrarouge est un film multicouche diélectrique préparé en empilant de manière alternée 4 couches à 11 couches des films diélectriques à faible indice de réfraction et de films diélectriques à indice de réfraction élevé.

3. Utilisation d'un film plastique dans un verre feuilleté incurvé, selon la revendication 1 ou la revendication 2, dans laquelle le film diélectrique est un diélectrique formé d'un film diélectrique sélectionné parmi TiO₂, Nb₂O₅, Ta₂O₅, SiO₂, Al₂O₃, ZrO₂, et MgF₂.

4. Utilisation d'un film plastique dans un verre feuilleté incurvé, selon l'une quelconque des revendications 1 à 3, dans laquelle la plaque de verre est une plaque de verre incurvée ayant un rayon de courbure de 0,9 m à 3 m.

5. Utilisation d'un film plastique dans un verre feuilleté incurvé, selon l'une quelconque des revendications 1 à 4, dans laquelle le film plastique est un film plastique préparé par un procédé d'allongement.

6. Utilisation d'un film plastique dans un verre feuilleté incurvé, selon l'une quelconque des revendications 1 à 5, dans laquelle l'épaisseur du film plastique est comprise entre 30 µm et 200 µm.

7. Utilisation d'un film plastique dans un verre feuilleté incurvé, selon l'une quelconque des revendications 1 à 6, dans laquelle le film de revêtement dur est un film de revêtement dur de type acrylique.
